# FASCICULE DE BREVET EUROPEEN

(11) **EP 1 726 398 B1**
(45) Date de publication et mention de la délivrance du brevet: **24.10.2007**
(21) Numéro de dépôt: 05104529.2
(22) Date de dépôt: 26.05.2005
(51) Int. Cl.: B23Q 1/00, B23Q 1/52

(54) **Dispositif de connexion électrique non interrompue entre une partie tournante et une partie fixe d'une machine outil**
Unterbrechungsfreie elektrische Verbindungseinrichtung zwischen einem drehenden Maschinenbauteil und einem festen Maschinenbauteil
Uninterrupted electrical connection system between a rotating part and a fixed part of a machine tool

(43) Date de publication de la demande: 29.11.2006
(73) Titulaire: Tornos SA, 2740 Moutier (CH)
(72) Inventeur: Paroz, Cédric, 2732 Saicourt (CH)
(74) Mandataire: BOVARD AG

(56) Documents cités:
- DE-A1- 19 843 575
- US-A- 1 706 824
- US-A- 4 057 881

## Description

L'invention se rapporte à un dispositif de connection électrique non interrompue entre deux parties d'une machine outil, dont une première partie qui est montée tournante sur une deuxième partie qui est considérée fixe.

L'invention a également pour objet les machines outils qui sont équipées d'un dispositif de connection électrique non interrompue du type précité.

L'invention s'applique particulièrement, mais non exclusivement à un dispositif de connection électrique non interrompue entre une première partie qui est montée tournante sur une deuxième partie qui est considérée fixe, la première partie portant au moins un appareil électrique utilisateur d'énergie électrique, cette première partie effectuant au moins une rotation fractionnée.

L'expression "rotation fractionnée" désigne une rotation qui est effectuée avec au moins un arrêt en une position angulaire prédéterminée.

Par exemple, la rotation fractionnée est une rotation réalisée par fractions angulaires successives de valeurs prédéterminées.

L'expression "énergie électrique" désigne de l'énergie électrique utilisée pour assurer au moins l'une des fonctions que sont l'alimentation électrique et la commande électrique d'un appareil électrique (transmission de l'énergie motrice et des signaux de commande).

Ainsi, l'invention s'applique plus particulièrement, mais non exclusivement, à l'alimentation électrique non interrompue d'une pluralité de moteurs électriques portés par une première partie d'une machine-outil, spécialement un barillet portant une pluralité de broches qui sont chacune entraînée en rotation par un moteur électrique, ledit barillet effectuant une rotation par fraction de tour, notamment, avec des arrêts sur des positions prédéterminées.

Le dispositif de l'invention est particulièrement destiné à équiper une machine-outil du type d'une machine transfert telle une décolleteuse multi-broches.

Outre un bâti, une telle machine-outil comprend :
- une première partie, considérée tournante, constituée par un barillet qui, monté rotatif autour d'un premier axe sur le bâti constituant une deuxième partie, considérée fixe, porte une pluralité de broches munies chacune d'une pince destinée à serrer une pièce pour permettre l'usinage d'une partie avant de cette pièce, notamment, lors de la rotation de ladite pièce autour d'un deuxième axe, la rotation du barillet autour du premier axe étant, par un ensemble moteur, commandée d'une manière fractionnée, notamment dans un sens premier prédéterminé, de manière à présenter les broches devant différents postes d'usinage dont les situations angulaires sont prédéfinies,
- de plusieurs blocs d'usinage, dits blocs d'usinage avants qui, portant chacun au moins un premier outil d'usinage, sont prévus pour l'usinage de ladite partie avant au niveau d'au moins certains des postes d'usinage.

Avec ce type de machine, il est souhaitable de pouvoir entraîner en rotation toutes les broches de manière séparée et, à cet effet, chaque broche est munie d'un moteur électrique.

Le fait que les broches et leurs moteurs soient portés par le barillet pose le problème de la transmission d'énergie électrique, c'est-à-dire notamment de l'énergie motrice et des signaux de commandes, entre, d'une part, une unité d'alimentation électrique des moteurs comprenant notamment un moyen de liaison à une source d'énergie extérieure à la machine et un moyen de commande de l'alimentation et, d'autre part, chacun des moteurs portés par le dit barillet.

Une solution connue consiste à utiliser un dispositif de connection électrique non interrompue constitué :
- d'une part, d'une pluralité de d'éléments distributeurs annulaires qui sont associés au barillet de manière à tourner en même temps que ce dernier et à présenter chacun une surface annulaire constituant une piste collectrice, les éléments annulaires étant reliés aux moteurs par des premiers conducteurs électriques de manière à permettre le transfert de l'énergie électrique collectée,
- d'autre part, une pluralité d'éléments collecteurs de l'électricité qui sont chacun placés en contact roulant ou glissant avec une piste collectrice et sont par ailleurs reliés à l'unité d'alimentation par des deuxième conducteurs électriques.

Chaque élément distributeur annulaire et l'élément collecteur associé réalisent physiquement une voie conductrice pour le passage du courant électrique entre un appareil consommateur et l'unité d'alimentation.

Les dispositifs d'alimentation de ce type sont relativement simples à construire, mais on déplore des incidents de fonctionnement lorsque le courant électrique qui doit être transmis comprend des trains d'impulsions extrêmement précis.

Un résultat que l'invention vise à obtenir est un dispositif de connection électrique non interrompue du type précité, qui ne présente pas les inconvénients connus.

A cet effet, l'invention a notamment pour objet un dispositif de connection électrique non interrompue selon la revendication 1.

L'invention a également pour objet les machines outils qui sont équipées d'un dispositif de connection électrique non interrompue du type précité.

L'invention sera mieux comprise à la lecture de la description ci-après faite à titre d'exemple non limitatif en regard du dessin ci-annexé qui représente schématiquement :

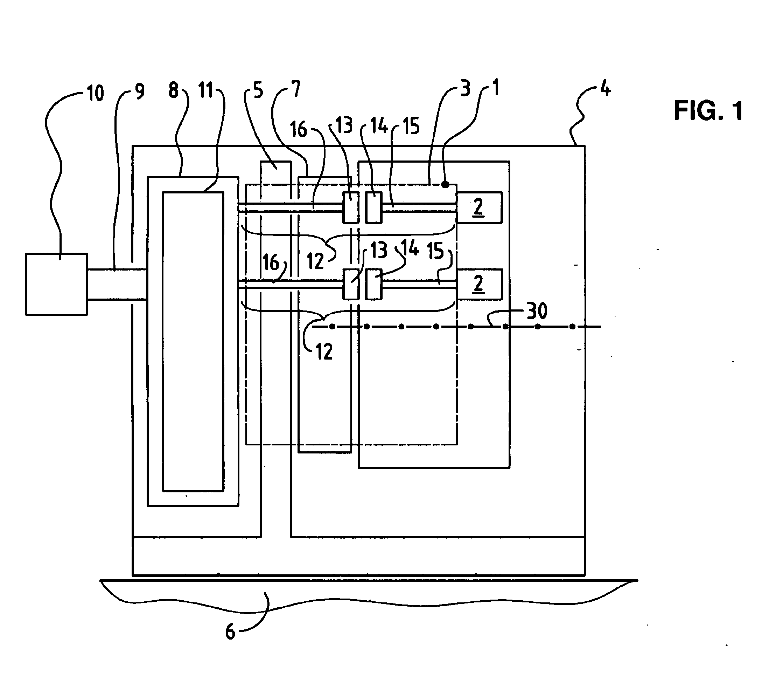

- figure 1 : vue en coupe partielle selon un plan longitudinal sensiblement vertical, une machine-outil équipée d'un dispositif de connection électrique non interrompue conforme à l'invention, représentée sous forme de blocs fonctionnels,

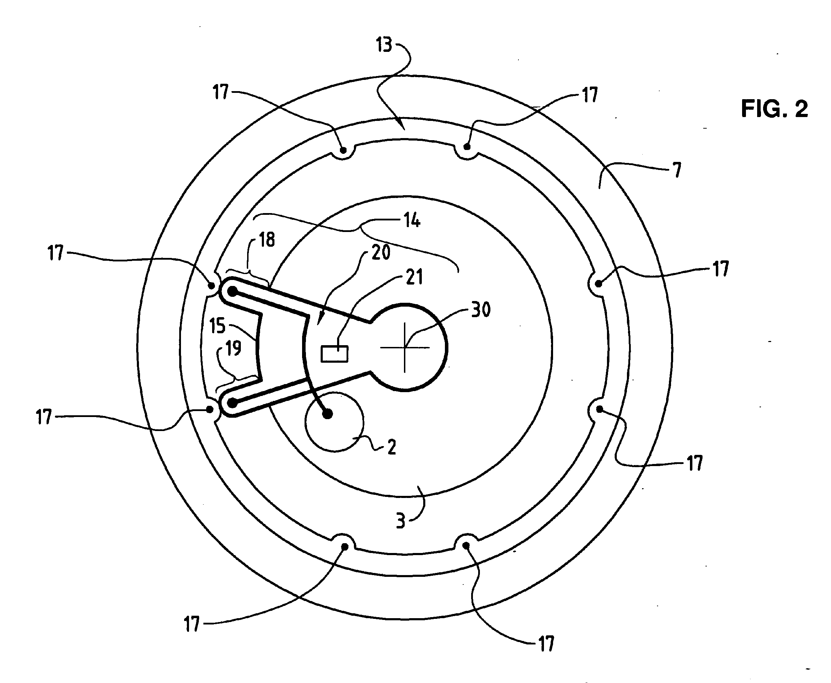

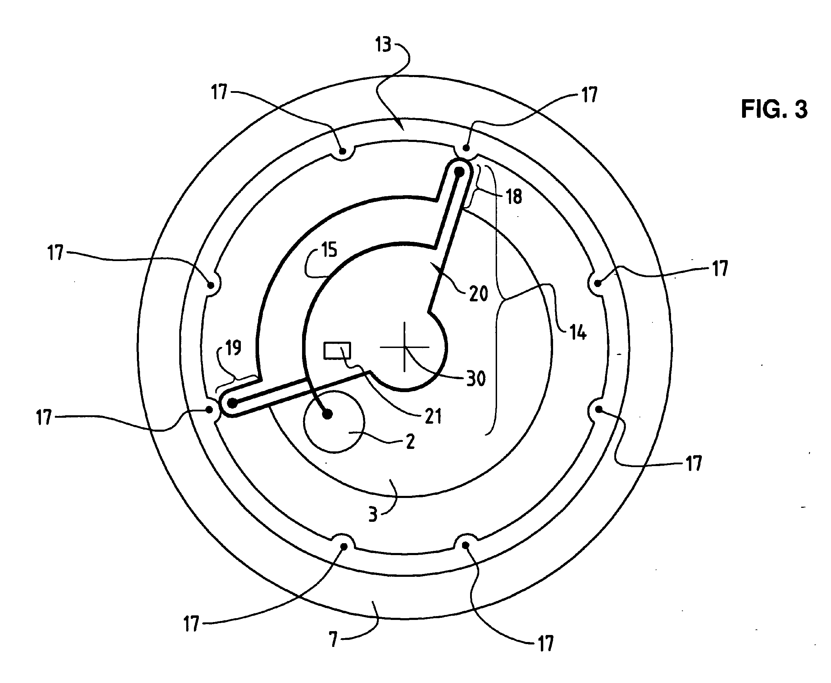

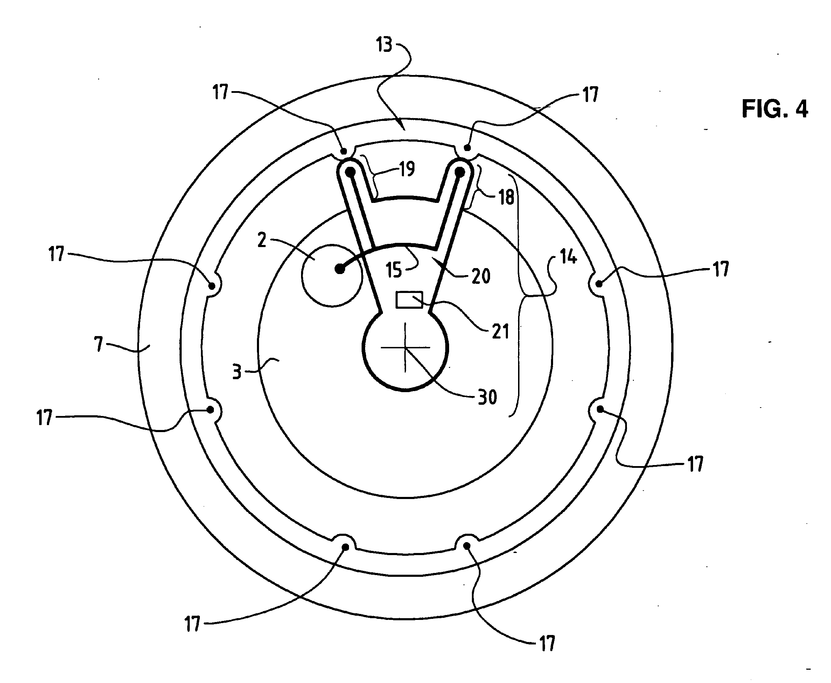

- figures 2 à 4 : vu axialement, le dispositif de connection électrique non interrompue selon l'invention, au cours de trois étapes successives de son fonctionnement, avant, pendant et après une rotation d'une fraction angulaire prédéterminée d'une première partie de la machine outil équipée, qui est montée tournante par rapport à une deuxième partie de la machine outil équipée, qui est considérée fixe, la première partie portant au moins un appareil électrique utilisateur d'énergie électrique, cette première partie effectuant au moins une rotation fractionnée.

En se reportant au dessin, on voit un dispositif 1 de connexion électrique non interrompue entre deux parties d'une machine outil 4, dont une première partie 3 qui est montée tournante sur une deuxième partie 5 qui est considérée fixe.

La deuxième partie 5 de la machine-outil 4 comprend essentiellement un bâti destiné à prendre appui sur un support 6, tel le sol, et ce bâti porte la première partie 3 au moyen d'un ensemble fonctionnel 7 de guidage et d'entraînement commandé en rotation.

Sous l'effet de l'ensemble fonctionnel 7 de guidage et d'entraînement commandé en rotation, la première partie 3 effectue une rotation par fractions angulaires successives de valeurs prédéterminées, notamment avec des arrêts dans des positions prédéterminées.

La première partie 3 porte au moins un appareil 2 consommateur d'énergie électrique, ci-après dit appareil consommateur 2.

L'ensemble fonctionnel 7 de guidage et d'entraînement commandé en rotation est ci-après dit, ensemble fonctionnel 7.

Tel que cela a été annoncé, la machine-outil 4 est spécialement, mais non limitativement, une machine―outil, telle une machine transfert connue sous le nom de décolleteuse de type multi-broches.

La première partie 3 de cette décolleteuse consiste en un barillet qui porte plusieurs broches chacune entraînée par un appareil consommateur 2 constitué par un moteur électrique.

Bien que cela n'apparaisse pas de manière flagrante sur les dessins, les moteurs électriques, à savoir, les appareils consommateurs 2 peuvent être alimentés en énergie électrique d'une manière non interrompue pendant la rotation du barillet, à savoir, de la première partie 3.

Tel que cela apparaît également, la machine-outil 4 comprend de même une unité d'alimentation électrique 8.

Cette unité d'alimentation électrique 8 comprend quant à elle, notamment :
- un câble de connexion électrique 9 à une source d'alimentation électrique 10 externe à la machine-outil 4, et
- un appareil de gestion et de commande 11 du fonctionnement notamment des appareils consommateurs 2.

Tel que cela apparaît au dessin, le dispositif de connection électrique non interrompue 1 comprend au moins une et avantageusement plusieurs voies conductrices 12 pour le passage de courant électrique entre les appareils consommateurs 2 et l'unité d'alimentation électrique 8.

Chaque voie conductrice 12 comprend un élément distributeur 13 et un élément collecteur 14 qui sont mobiles en rotation l'un par rapport à l'autre autour de l'axe de rotation 30 de la première partie 3.

Classiquement, l'élément distributeur 13 est fixe et les différents éléments collecteurs sont mobiles.

Les différents éléments collecteurs 14 coopèrent avec l'élément distributeur 13 pour y prélever du courant électrique de manière continue en dépit de la rotation fractionnée de la première partie 3.

Les différents éléments collecteurs 14 coopèrent donc avec l'élément distributeur 13 pour y prélever du courant électrique en des positions qui ne sont pas limitées à des positions d'arrêts de la première partie 3.

Chaque élément collecteur 14 est relié à un appareil consommateur moteur 2 par un premier conducteur électrique 15 et l'élément distributeur 13 associé à cet élément collecteur 14 est relié à l'unité d'alimentation électrique 8 par au moins un deuxième conducteur électrique 16.

De manière notable :
- l'élément distributeur 13 présente une pluralité de points de contact 17 répartis en relation avec le fractionnement de la rotation de la première partie 3, pour autoriser le prélèvement de courant électrique au moyen d'organes de prélèvement 18, et ce, en différentes positions angulaires prédéterminées en relation avec le fractionnement de la rotation de cette première partie 3,
- l'élément collecteur 14 comporte au moins un groupe de deux organes de prélèvement, dont un premier organe de prélèvement 18 et un deuxième organe de prélèvement 19 qui,
   - sont reliés à un appareil consommateur 2 par au moins un premier conducteur 15,
   - sont mobiles l'un par rapport à l'autre sous l'effet d'un appareil de commande 20 des déplacements de ces premier et deuxième organes de prélèvement 18, 19,
- l'appareil de commande 20 des déplacements de ces premier et deuxième organes de prélèvement 18, 19, comprend un mécanisme d'actionnement 21 qui,
   - pendant la rotation fractionnée de la première partie 3, maintient l'un desdits premier organes de prélèvement 18, 19 immobile et en appui sur au moins un point de contact 17 de l'élément distributeur 13 et déplace l'autre desdits premier et deuxième organe de prélèvement 18, 19 vers un autre point de contact 17,
   - au moins lors de l'arrêt de la rotation fractionnée de la première partie 3, applique sur un point de contact 17 celui desdits premier et deuxième organes de prélèvement 19 qui a été déplacé pendant la rotation fractionnée de la première partie 3.

La répartition des points de contact 17 en relation avec le fractionnement de la rotation signifie que ces points de contact 17 sont en nombre suffisants pour être placés en autant de sites angulaires que la rotation de la première partie 3 comprend de fraction angulaires.

De manière notable, chaque élément collecteur 14 comporte un premier nombre d'organes de prélèvement 18, 19 et l'élément distributeur 13 associé à cet élément collecteur 14 présente un deuxième nombre de points de contact 17, le deuxième nombre étant supérieur au premier nombre d'au moins une unité.

Par exemple, dans le cas d'une rotation fractionnée en deux secteurs angulaires, lorsque qu'un élément collecteur 14 comporte un premier nombre d'organes de prélèvement 18, 19 qui est égal à deux, l'élément distributeur 13 associé à cet élément collecteur 14 présente un deuxième nombre de points de contact 17 qui est égal à trois.

Dans le cas d'une rotation fractionnée en quatre secteurs angulaires, représentée au figures 2 à 4, lorsque qu'un élément collecteur 14 comporte un premier nombre d'organes de prélèvement 18, 19 qui est égal à deux, l'élément distributeur 13 associé à cet élément collecteur 14 présente un deuxième nombre de points de contact 17 qui est égal à huit.

Cette configuration correspond par exemple au cas où la première partie 3 porte quatre broches qui doivent être successivement présentées à quatre postes différents.

Chacune des quatre broches précitées est équipée moteur d'un électrique constituant un appareil 2 consommateur d'énergie électrique.

Sur les figures 2 à 4, une seule voie conductrice 12 a été représentée et cette voie conductrice 12 est associée à un seul appareil 2 consommateur d'énergie électrique.

La mise en oeuvre du dispositif de connection électrique non interrompue selon l'invention permet de garantir la continuité du passage du courant électrique entre l'unité d'alimentation électrique 8 et les appareils électriques 2 consommateurs d'énergie électrique.

De manière remarquable, le mécanisme 21 de l'appareil de commande 20 des déplacements desdits premier et deuxième organes de prélèvement 18, 19, assure que, préalablement au déplacement d'un desdits premier et deuxième organes de prélèvement 18, 19 d'un point de contact 17 à un autre point de contact 17, l'organe de prélèvement concerné soit décollé du point de contact 17 contre lequel il a été maintenu.

De manière également remarquable, le mécanisme 21 de l'appareil de commande 20 des déplacements desdits premier et deuxième organes de prélèvement 18, 19, assure qu'après rotation de la première partie 3 d'une fraction angulaire, et donc à l'issue du déplacement d'un desdits premier et deuxième organes de prélèvement 18, 19 d'un point de contact 17 à un autre point de contact 17, l'organe de prélèvement concerné soit appliqué vers le point de contact 17 contre lequel il doit être maintenu.

Le mécanisme 21 de l'appareil de commande met par exemple en oeuvre des chemins de cames avec lesquels coopèrent des leviers qui déplacent les organes de prélèvement 17, 18.

L'élaboration d'un tel mécanisme sur la base des indications des fonctionnalités exigées est à la portée de l'homme de l'art.

## Revendications

1. Dispositif (1) de connexion électrique non interrompue entre deux parties d'une machine outil (4), dont une première partie (3) qui est montée tournante sur une deuxième partie (5) qui est considérée fixe, la première partie (3),
. effectuant une rotation par fractions angulaires successives de valeurs prédéterminées,
. portant au moins un appareil (2) consommateur d'énergie électrique, dit appareil consommateur (2), le dispositif de connection électrique non interrompue (1) comprenant au moins une voie conductrice (12) pour le passage de courant électrique entre au moins un appareil consommateur (2) et une unité d'alimentation électrique (8),
chaque voie conductrice (12) comprenant un élément distributeur (13) et un élément collecteur (14) qui sont mobiles en rotation l'un par rapport à l'autre autour de l'axe de rotation (30) de la première partie (3),
ce dispositif étant **caractérisé en ce que :**
- l'élément distributeur (13) présente une pluralité de points de contact (17) répartis en relation avec le fractionnement de la rotation de la première partie (3), pour autoriser le prélèvement de courant électrique au moyen d'organes de prélèvement (18), et ce, en différentes positions angulaires prédéterminées en relation avec le fractionnement de la rotation de cette première partie (3),
- l'élément collecteur (14) comporte au moins un groupe de deux organes de prélèvement, dont un premier organe de prélèvement (18) et un deuxième organe de prélèvement (19) qui,
. sont reliés à un appareil consommateur (2) par au moins un premier conducteur (15),
. sont mobiles l'un par rapport à l'autre sous l'effet d'un appareil de commande (20) des déplacements de ces premier et deuxième organes de prélèvement (18, 19),
- l'appareil de commande (20) des déplacements de ces premier et deuxième organes de prélèvement (18, 19), comprend un mécanisme (21) qui,
. pendant la rotation fractionnée de la première partie (3), maintient l'un desdits premier organes de prélèvement (18, 19) immobile et en appui sur au moins un point de contact (17) de l'élément distributeur (13) et déplace l'autre desdits premier et deuxième organe de prélèvement (18, 19) vers un autre point de contact (17),
. au moins lors de l'arrêt de la rotation fractionnée de la première partie (3), applique sur un point de contact (17) celui desdits premier et deuxième organes de prélèvement (19) qui a été déplacé pendant la rotation fractionnée de la première partie (3).

2. Dispositif selon la revendication 1, **caractérisé en ce que** chaque élément collecteur (14) comporte un premier nombre d'organes de prélèvement (18, 19) et l'élément distributeur (13) associé à cet élément collecteur (14) présente un deuxième nombre de points de contact (17), le deuxième nombre étant supérieur au premier nombre d'au moins une unité.

3. Dispositif selon la revendication 1 ou 2, **caractérisé en ce que** le mécanisme (21) de l'appareil de commande (20) des déplacements desdits premier et deuxième organes de prélèvement (18, 19), assure que, préalablement au déplacement d'un desdits premier et deuxième organes de prélèvement (18, 19) d'un point de contact (17) à un autre point de contact (17), l'organe de prélèvement concerné soit décollé du point de contact (17) contre lequel il a été maintenu.

4. Dispositif selon la revendication 1 ou 2, **caractérisé en ce que** le mécanisme (21) de l'appareil de commande (20) des déplacements desdits premier et deuxième organes de prélèvement (18, 19), assure qu'après rotation de la première partie (3) d'une fraction angulaire, et donc à l'issue du déplacement d'un desdits premier et deuxième organes de prélèvement (18, 19) d'un point de contact (17) à un autre point de contact (17), l'organe de prélèvement concerné soit appliqué vers le point de contact (17) contre lequel il doit être maintenu.

5. Machine-outil équipée d'un dispositif de connection électrique non interrompue selon l'une quelconque des revendications 1 à 4.

## Claims

1. Device (1) for uninterrupted electrical connection between two parts of a machine tool (4), being a first part (3) which is mounted turning on a second part (5) which is considered fixed, the first part (3),
. carrying out a rotation by successive angular fractions of predetermined values,
. bearing at least one electrical energy consumer unit (2), referred to as consumer unit (2),
the device for non-interrupted electrical connection (1) comprising at least one conducting path (12) for the passage of electrical current between at least one consumer unit (2) and an electrical feed unit (8), each electrical path (12) comprising a distributor element (13) and a collector element (14) which are movable in rotation, one with respect to the other about the axis of rotation (30) of the first part (3),
this device being **characterised in that** :
- the distributor element (13) has a plurality of contact points (17) distributed in relation to the fractionation of the rotation of the first part (3), to allow the pick up of electrical current to the pick up means (18), and this in different predetermined angular positions in relation to the fractionation of the rotation of this first part (3),
- the collector element (14) comprises at least one group of two pick up elements, being a first pick up element (18) and a second pick up element (19) which
. are connected to a consumer unit (2) by at least a first conductor (15),
. are movable, one with respect to the other, under the effect of a unit (20) of control of the displacements of these first and second pick up elements (18, 19),
- the unit of control (20) of the displacements of these first and second pick up elements (18, 19), comprises a mechanism (21) which,
. during the fractionated rotation of the first part (3), keeps one of said first pick up elements (18, 19) immobile and abutting on at least one contact point (17) of the distributor element (13) and displaces the other of said first and second pick up elements (18, 19) to another contact point (17),
. at least upon stopping of the fractionated rotation of the first part (3), applies, on a contact point (17), whichever of said first and second pick up elements (19) was displaced during the fractionated rotation of the first part (3).

2. Device according to claim 1, **characterised in that** each collector element (14) comprises a first number of pick up elements (18, 19) and the distributor element (13) associated with this collector element (14) has a second number of contact points (17), the second number being greater than the first number by at least one unit.

3. Device according to claim 1 or 2, **characterised in that** the mechanism (21) of the unit of control (20) of the displacements of said first and second pick up elements (18, 19), ensures that, before the displacement of one of said first and second pick up elements (18, 19) from one contact point (17) to another contact point (17), the pick up element concerned is disengaged from the contact point (17) against which it has been held.

4. Device according to claim 1 or 2, **characterised in that** the mechanism (21) of the unit of control (20) of the displacements of said first and second pick up elements (18, 19), ensures that, after rotation of the first part (3) by an angular fraction, and therefore at the end of the displacement of one of said first and second pick up elements (18, 19) from one contact point (17) to another contact point (17), the pick up element concerned is applied to the contact point (17) against which it must be held.

5. Machine tool equipped with a device for non-interrupted electrical connection according to any one of the claims 1 to 4.

## Patentansprüche

1. Vorrichtung (1) zur unterbrechungsfreien elektrischen Verbindung zwischen zwei Teilen einer Werkzeugmaschine (4) darunter ein erster Maschinenteil (3), der drehbar auf einen zweiten, als feststehend betrachteten Maschinenteil (5) montiert ist, wobei der erste Maschinenteil (3)
. eine Umdrehung in aufeinander folgenden Teilwinkeln mit festgelegten Werten ausführt,
. mindestens ein elektrische Energie verbrauchendes Gerät (2) trägt, das sogenannte Verbrauchergerät (2),
Vorrichtung zur unterbrechungsfreien elektrischen Verbindung (1), welche mindestens eine Leiterbahn (12) für den Durchfluss von elektrischem Strom zwischen mindestens einem Verbrauchergerät (2) und einer elektrischen Spannungsversorgungseinheit (8) aufweist,
wobei jede Leiterbahn (12) ein Verteilerbauteil (13) und ein Kollektorbauteil (14) aufweist, die zueinander beweglich drehbar um die Drehachse (30) des ersten Maschinenteils (3) gelagert sind,
wobei diese Vorrichtung **dadurch gekennzeichnet ist, dass**:
- das Verteilerbauteil (13) eine Mehrzahl von in Verbindung mit der Unterteilung der Umdrehung des ersten Maschinenteils verteilten Kontaktpunkten (17) aufweist, um die Abnahme von elektrischem Strom mittels Abnehmerorganen (18) zu gestatten, und dies in verschiedenen, in Verbindung mit der Unterteilung der Umdrehung dieses ersten Maschinenteils (3) festgelegten Winkellagen,
- das Kollektorbauteil (14) mindestens eine Gruppe von zwei Abnehmerorganen aufweist, darunter ein erstes Abnehmerorgan (18) und ein zweites Abnehmerorgan (19), die
. durch mindestens einen ersten Leiter (15) mit einem Verbrauchergerät (2) verbunden sind,
. unter Einwirkung eines Betätigungsgerätes (20) für die Bewegungen dieses ersten und zweiten Abnehmerorgans (18, 19) zueinander beweglich sind,
- das Betätigungsgerät (20) für die Bewegungen dieses ersten und zweiten Abnehmerorgans (18, 19) weist einen Mechanismus (21) auf, der
. während der unterteilten Umdrehung des ersten Maschinenteils (3) eines der genannten ersten Abnehmerorgane (18, 19) unbeweglich und auf mindestens einem Kontaktpunkt (17) des Verteilerelements (13) in Andruck hält und bewegt ein anderes der genannten ersten und zweiten Abnehmerorgane (18, 19) zu einem anderen Kontaktpunkt (17),
. zumindest beim Halt der unterteilten Umdrehung des ersten Maschinenteils (3) dasjenige der genannten ersten und zweiten Abnehmerorgane (19) an einen Kontaktpunkt (17) anlegt, das während der unterteilten Umdrehung des ersten Maschinenteils (3) bewegt wurde,

2. Vorrichtung nach Anspruch 1, **dadurch gekennzeichnet, dass** jedes Kollektorbauteil (14) eine erste Anzahl von Abnehmerorganen (18, 19) aufweist und dass das zu diesem Kollektorbauteil (14) gehörende Verteilerbauteil (13) eine zweite Anzahl an Kontaktpunkten (17) aufweist, wobei die zweite Anzahl mindestens um eine Einheit größer als die erste Anzahl ist.

3. Vorrichtung nach Anspruch 1 oder 2, **dadurch gekennzeichnet, dass** der Mechanismus (21) des Betätigungsgerätes (20) für die Bewegungen der genannten ersten und zweiten Abnehmerorgane (18, 19) gewährleistet, dass vor der Bewegung eines der genannten ersten und zweiten Abnehmerorgane (18, 19) von einem Kontaktpunkt (17) zu einem anderen Kontaktpunkt (17) das betreffende Abnehmerorgan vom Kontaktpunkt (17) gelöst wird, gegen den es gedrückt gehalten wurde.

4. Vorrichtung nach Anspruch 1 oder 2, **dadurch gekennzeichnet, dass** der Mechanismus (21) des Betätigungsgerätes (20) für die Bewegungen der genannten ersten und zweiten Abnehmerorgane (18, 19) gewährleistet, dass nach der Drehung des ersten Maschinenteils (3) um einen Teilwinkel und somit am Ende der Bewegung eines der genannten ersten und zweiten Abnehmerorgane (18, 19) von einem Kontaktpunkt (17) zu einem anderen Kontaktpunkt (17) das betreffende Abnehmerorgan an dem Kontaktpunkt (17) angelegt wird, gegen den es gedrückt gehalten werden soll.

5. Werkzeugmaschine, die mit einer Vorrichtung zur unterbrechungsfreien elektrischen Verbindung nach einem der Ansprüche 1 bis 4 ausgerüstet ist.
